(19) Europäisches Patentamt
European Patent Office
Office européen des brevets

(11) **EP 3 820 302 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **19737713.8**

(22) Anmeldetag: **08.07.2019**

(51) Internationale Patentklassifikation (IPC):
**A23L 2/44** (2006.01)   **A23L 3/3526** (2006.01)
**A23L 3/3508** (2006.01)   **A23L 3/3544** (2006.01)

(52) Gemeinsame Patentklassifikation (CPC):
**A23L 2/44; A23L 3/3508; A23L 3/3526; A23L 3/3544**

(86) Internationale Anmeldenummer:
**PCT/EP2019/068205**

(87) Internationale Veröffentlichungsnummer:
**WO 2020/011693 (16.01.2020 Gazette 2020/03)**

(54) **VERFAHREN ZUR ENTKEIMUNG UND KONSERVIERUNG VON NAHRUNGSMITTELN UND GETRÄNKEN**

METHOD FOR DECONTAMINATING AND PRESERVING FOOD AND BEVERAGES

PROCÉDÉ DE DÉSINFECTION ET DE CONSERVATION DE DENRÉES ALIMENTAIRES ET DE BOISSONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2018 EP 18182926**

(43) Veröffentlichungstag der Anmeldung:
**19.05.2021 Patentblatt 2021/20**

(73) Patentinhaber: **LANXESS Deutschland GmbH 50569 Köln (DE)**

(72) Erfinder: **TAUPP, Marcus 51519 Odenthal (DE)**

(56) Entgegenhaltungen:
**US-A1- 2014 141 137**

• **Anonymous: "Natamycin", , 13. Mai 2014 (2014-05-13), XP055526746, Gefunden im Internet: URL:https://www.canada.ca/content/dam/hc-sc/migration/hc-sc/cps-spc/alt_formats/pdf/pubs/pest/_decisions/rd2014-07/rd2014-07-eng.pdf [gefunden am 2018-11-26]**
• **AGUILAR ET AL: "Scientific Opinion on the use of natamycin (E 235) as a food additive", THE EFSA JOURNAL, Bd. 7, Nr. 12, 1. Dezember 2009 (2009-12-01), Seite 1412, XP055526633, Parma, IT ISSN: 1831-4732, DOI: 10.2903/j.efsa.2009.1412**
• **H Brik: "New high-molecular decomposition products of natamycin (pimaricin) with intact lactone-ring", , 1. Januar 1976 (1976-01-01), XP055526626, Gefunden im Internet: URL:http://www.ncbi.nlm.nih.gov/pubmed/1084885 [gefunden am 2018-11-23] in der Anmeldung erwähnt**

**Beschreibung**

Die Erfindung betrifft eine Mischung aus Natamycin und Mycosamin und die Verwendung dieser Mischungen zur Entkeimung und Konservierung von Nahrungsmitteln und Getränken, sowie ein Verfahren zur Einarbeitung der erfindungsgemäßen Mischungen in die Nahrungsmittel und Getränke.

Aufgrund zahlreicher Nährstoffe und verschiedener Möglichkeiten eines mikrobiellen Eintrags während der Produktion können Getränke und Nahrungsmittel leicht durch Mikroorganismen kontaminiert werden, was letztlich zu Verderb und Unbrauchbarkeit des Produkts führt. Des Weiteren stellt eine mikrobielle Kontamination von Getränken und Nahrungsmitteln ein Gesundheitsrisiko für den Konsumenten dar. Durch die Verwendung von chemischen Konservierungsstoffen wird ein Überleben oder ein Wachstum von Mikroorganismen in Nahrungsmitteln und Getränken verhindert.

Aufgrund eines weltweit ansteigenden Warenverkehrs machen sich z.B. in Getränken vermehrt Keime bemerkbar, die dem Getränkehersteller bisher nicht bekannt waren. Vermehrt hat sich gezeigt dass Konservierungsmittel nicht ausreichend stark genug sind und somit sehr hohe Konzentrationen eingesetzt werden, um zu verhindern dass sich Mikroorganismen vermehren können und somit das Getränk entsprechend kontaminieren. Der Einsatz von hohen Konzentrationen an Konservierungsmitteln ist aber aus ökonomischer Sicht unerwünscht und durch gesetzliche Regelungen limitiert. Natamycin als Konservierungsstoff wird für die Oberflächenbehandlung von Käse und Wurstwaren verwendet und in einigen Ländern wird es auch zur Konservierung von Joghurt, Erfrischungsgetränken sowie Wein und Cider verwendet.

Aus der US-B 6136356 ist die Verwendung einer Kombination aus Dimethyldicarbonat, Natamycin und ausgewählten Sorbaten zum Schutz von Getränken und Nahrungsmitteln gegen Schimmelbildung bekannt. Auch diese Mischung wirkt nicht gegen alle Mikroorganismen effizient. Die Verwendung von Natamycin mit implizit Spuren von Mycosamin sowie das Verfahren zur Entkeimung von Getränken oder Nahrungsmittel mit Natamycin sind in https://www.canada.ca/content/dam/hc-sc/migration/hc-sc/cps-spc/alt_formats/pdf/pubs/pest/_decisions/rd2014-07/rd2014-07-eng.pdf, in AGUILAR ET AL: "Scientific Opinion on the use of natamycin (E 235) as a food additive",THE EFSA JOURNAL, 2009, oder in US2014/141137 schon bekannt. H Brik: "New high-molecular decomposition products of natamycin (pimaricin) with intact lactone-ring", 1976 offenbart, dass das Hauptprodukt der Hydrolyse von Natamycin Mycosamin ist.

Der Wirkstoff Natamycin ist komplex aufgebaut und gehört zur Gruppe der sogenannten Polyen-Makrolide. Im Molekül befindet sich auch das sog. Mycosamin, ein Aminozucker. Natamycin als Wirksubstanz zeigt eine begrenzte Stabilität unter Umweltbedingungen und kann unter dem Einfluss von pH, Temperatur, Oxidation und Licht in verschiedene Produkte zerfallen. Im Sauren, wie z.B. in Wein oder Softdrinks, zerfällt Natamycin schnell durch Hydrolyse. Hierbei wird der Aminozucker Mycosamin freigesetzt (Brik H., 1976, The Journal of Antibiotics, VOL. XXIX NO. 6, S. 632-637).

Es bestand daher weiterhin Bedarf nach einer wirkungsvollen Entkeimungs- und Konservierungsmischung mit dem die Nachteile aus dem Stand der Technik überwunden werden können.

Es wurde nun überraschend gefunden, dass Mycosamin in Kombination mit Natamycin synergistisch und verbessert gegen Mikroorganismen wirkt.

Gegenstand der Erfindung ist daher eine Mischung enthaltend Natamycin und Mycosamin in einer Menge > 95 Gew. % bezogen auf das Gesamtgewicht der Mischung und in einem Gewichtsverhältnis von 1:10 bis 10:1.

Natamycin (CAS-Nr. 7681-93-8 auch Pimaricin genannt) ist (8E,14E,16E,18E,20E)-(1R,3S,5R,7R,12R,22R,24S,25R,26S)-22-(3-Amino-3,6-didesoxy-25-D-mannopyranosyloxy)-1,3,26-trihydroxy-12-methyl-10-oxo-6,11,28-trioxatricyclo[22.3.1.05,7]octacosa-8,14,16,18,20-pentaen-25-carbonsäure. Mycosamin (CAS-Nr. 527-38-8) ist 3-Amino-3,6-dideoxymannose.

Natamycin und Mycosamin sind vorzugsweise in einer Menge > 98 Gew. % bezogen auf das Gesamtgewicht der Mischung in der Mischung enthalten. Besonders bevorzugt besteht die Mischung aus Natamycin und Mycosamin.

Natamycin und Mycosamin sind in einem Gewichtsverhältnis von 10 : 1 zu 1 : 10, besonders bevorzugt von 1 : 8 bis 1 : 3 und ganz besonders bevorzugt von 1 : 6 bis 1 : 3 in der Mischung enthalten.

Die erfindungsgemäße Mischung kann durch weitere Additive, wie Lösungsmittel oder auch durch andere Additive, wie z.B. Emulgatoren oder anderen geeigneten Lebensmittelzusatzstoffen verdünnt werden. Dann kann diese verdünnte Mischung dem Getränk oder Nahrungsmittel hinzugegeben werden. Als Lösungsmittel können hydrophile, organische und mit Wasser mischbare Lösungsmittel eingesetzt werden. Die erfindungsgemäße Mischung kann auch ohne weitere Additive den Getränken oder Nahrungsmitteln zugesetzt werden. Bevorzugt wird kein zusätzliches Additiv hinzugegeben.

Die erfindungsgemäßen Mischungen können auch Wasser, Salze und/oder Lösungsmittel als Verunreinigungen enthalten. Diese Bestandteile liegen vorzugsweise in einer Menge < 5 Gew. %, besonders bevorzugt in einer Menge < 2 Gew. % in der erfindungsgemäßen Mischung vor. Besonders bevorzugt enthält die erfindungsgemäße Mischung keine Verunreinigungen.

Zudem ist von der Erfindung die Verwendung der erfindungsgemäßen Mischungen zur Entkeimung und Konservierung von Nahrungsmitteln und Getränken umfasst.

Vorzugsweise wird die erfindungsgemäße Mischung in einer Menge von 0.01 ppm (mg/L) bis 2000 ppm (mg/L), besonders bevorzugt in einer Mengen von 0,01 ppm (mg/L) bis 100 ppm (mg/L) bezogen auf die Menge der Nahrungsmittel oder Getränke eingesetzt.

Nahrungsmittel im Sinne der Erfindung sind vorzugsweise Milchprodukte, wie z.B. Käse Joghurt, Eiscreme, oder Butter, oder Margarine, Salatdressings, Püree, Mayonnaise, Saucen oder Wurstwaren oder Backwaren.

Unter Getränken werden vorzugsweise Erfrischungsgetränke sowie alkoholische Getränke, wie vorzugsweise Softdrinks, Fruchtsäfte und fruchtsafthaltige Getränke, aromatisierte Erfrischungsgetränke, wie Limonaden, Tee (sogenannte ready-to-drink-Teegetränke), wie vorzugsweise Eistee und Sportdrinks, Mischgetränke eines Tee/fruchtsafthaltigen Erfrischungsgetränkes, aber auch entsprechende Konzentrate, sowie Weincooler und entalkoholisierte Weine, Weine, Cocktails, Alcopops, Cider und Biermischgetränke verstanden. Besonders bevorzugt sind Getränke Eistees, Sportdrinks, Fruchtsäfte und fruchtsafthaltige Getränke, Weine, Cocktails, Alcopops, Cider und Biermischgetränke.

Bevorzugte Mikroorganismen gegen die erfindungsgemäßen Mischungen zur Entkeimung und Konservierung verwendet werden können, sind Hefen und Schimmel. Besonders bevorzugt wirken die erfindungsgemäßen Mischungen gegen Aspergillus chevalieri, Aspergillus clavatus, Aspergillus flavus Aspergillus nidulans, Aspergillus niger, Aspergillus ochraceus, Aspergillus orycae, Botrytis cinerea, Fusarium sporotrichioides, Gloeosporium album, Mucor mucedo, Penicillium chrysogenum, Penicillium digitatum , Penicillium expansum, Penicillium islandicum, Penicillium notatum, Penicillium roqueforti, Rhizopus oryzae, Candida glabrata, Candida krusei, Saccharomyces cerevisiae, Zygosaccharomyces bailii, Penicillium carneum, Trichoderma virens und Candida albicans. Ganz besonders bevorzugt wirken die erfindungsgemäßen Mischungen gegen Candida albicans.

Natamycin und Mycosamin sind kommerziell erhältlich. Natamycin ist z.B. unter dem Namen Natamax® von der DuPont Danisco Deutschland GmbH erhältlich. Mycosamin ist z.B. von der BOC Science Ltd. aus den USA kommerziell erhältlich.

Nach der Entkeimung der Nahrungsmittel oder Getränke findet vorzugsweise eine Konservierung durch die Wirkstoffe der erfindungsgemäßen Mischung statt.

Von der Erfindung ist ebenfalls ein Verfahren zur Entkeimung und Konservierung von Nahrungsmitteln und Getränken umfasst, bei dem die erfindungsgemäße Mischung in die Nahrungsmittel oder die Getränke eingearbeitet wird.

Bevorzugt dient das erfindungsgemäße Verfahren zur Entkeimung und Konservierung von Getränken. Daher ist von der Erfindung bevorzugt ein Verfahren zur Entkeimung und Konservierung von Getränken umfasst, bei dem die erfindungsgemäße Mischung in die Getränke eingearbeitet wird.

Die Einarbeitung der erfindungsgemäßen Mischung in die Getränke verläuft vorzugsweise bei 4°C bis 40°C, besonders bevorzugt bei 8°C bis 30°C.

Die Getränke in die die Mischung eingearbeitet wird weisen vorzugsweise einen pH Wert von 5 bis 8, besonders bevorzugt einen pH Wert von 6,5 bis 7,5 auf.

Die Einarbeitung der erfindungsgemäßen Mischung in die Getränke erfolgt vorzugsweise durch automatische Dosiersysteme. Hierbei erfolgt die Zugabe als Lösung direkt in den Getränkestrom. Durch die Strömung erfolgt ebenfalls die Vermischung im Rohrsystem. Die Zugabe kann ebenfalls als Feststoff erfolgen. Falls die erfindungsgemäße Mischung als Feststoff eingesetzt wird, erfolgt vorzugsweise eine Lösung in einem separaten Tank. Die erfindungsgemäße Mischung wird aus dem separaten Tank dann in den Getränkestrom gepumpt oder in den Getränkebehälter injiziert.

Die erfindungsgemäße Mischung wirkt in besonders effizienter Weise gegen Mikroorganismen, insbesondere gegen Hefen und Schimmel. Überraschend wurde gefunden, dass die antimikrobielle Wirkung in den beanspruchten Bereichen besonders hoch ist und die Mischung synergistisch wirkt. Die Nahrungsmittel und Getränke können dadurch besonders effizient und kostengünstig entkeimt und konserviert werden.

**Beispiele**

**Beispiel 1:**

Ein Wachstum-Medium (RPMI-1640 wurde entsprechend CLSI Richtlinie M27-A3 hergestellt (CLSI=Clinical and Laboratory Standards Institute)) wurde mit 1000 CFU/mL (CFU = colony forming units) an Mikroorganismen kontaminiert und eine Mischung aus Natamycin und Mycosamin wurde im Vergleich zu den Einzelsubstanzen auf Wirksamkeit hin untersucht. Nach einer Woche wurde ein Anteil des Wachstum-Mediums auf das Vorhandensein von Mikroorganismen untersucht und durch diese Versuche die MHK (Minimale Hemmkonzentration) bestimmt.

| Einzel-Testsubstanzen: | Natamycin, Mycosamin |
|---|---|
| Testkeim: | *Candida albicans* |

(fortgesetzt)

| Substrat: | Wachstums-Medium |
|---|---|
| Keimeinsaat pro mL Substrat: | 1000 cfu/mL |

**Tabelle 1:**

| Wirkstoff-einzeln | MHK (mg/L) nach einer Woche | |
|---|---|---|
| Natamycin | 1 mg/L | |
| Mycosamin | 32 mg/L | |
| **Wirkstoff-Mischung** | **MHK (mg/L) nach einer Woche** | **Synergistischer Index** |
| Natamycin Mycosamin (Gewichtsverhältnis 1 : 4) | 2,5 mg/L | SI= 0,56 |

**Beispiel 2:**

Ein Wachstums-Medium (RPMI-1640 wurde entsprechend CLSI Richtlinie M27-A3 hergestellt (CLSI=Clinical and Laboratory Standards Institute)) wurde mit 1000 CFU/mL an Mikroorganismen kontaminiert und eine Mischung aus Natamycin und Mycosamin wurde im Vergleich zu den Einzelsubstanzen auf Wirksamkeit hin untersucht. Nach einer Woche wurde ein Anteil des Mediums auf das Vorhandensein von Mikroorganismen untersucht und durch diese Versuche die MHK (Minimale Hemmkonzentration) bestimmt.

| Einzel-Testsubstanzen: | Natamycin, Mycosamin |
|---|---|
| Testkeim: | *Candida glabrata* |
| Substrat: | Wachstums-Medium |
| Keimeinsaat pro mL Substrat: | 1000 cfu/mL |

**Tabelle 2:**

| Wirkstoff-einzeln | MHK (mg/L) nach einer Woche | |
|---|---|---|
| Natamycin | 1 mg/L | |
| Mycosamin | 0,5 mg/L | |
| **Wirkstoff-Mischung** | **MHK (mg/L) nach einer Woche** | **Synergistischer Index** |
| Natamycin Mycosamin (Gewichtsverhältnis 4 : 1) | 0,625 mg/L | SI= 0,75 |

**Beispiel** 3 :

Ein Wachstums-Medium (RPMI-1640 wurde entsprechend CLSI Richtlinie M27-A3 hergestellt (CLSI=Clinical and Laboratory Standards Institute)) wurde mit einer 1000 CFU/mL an Mikroorganismen kontaminiert und eine Mischung aus Natamycin und Mycosamin wurde im Vergleich zu den Einzelsubstanzen auf Wirksamkeit hin untersucht. Nach einer Woche wurde ein Anteil des Mediums auf das Vorhandensein von Mikroorganismen untersucht und durch diese Versuche die MHK (Minimale Hemmkonzentration) bestimmt.

| Einzel-Testsubstanzen: | Natamycin, Mycosamin |
|---|---|
| Testkeim: | *Candida krusei* |
| Substrat: | Wachstums-Medium |
| Keimeinsaat pro mL Substrat: | 1000 cfu/mL |

**Tabelle 3:**

| Wirkstoff-einzeln | MHK (mg/L) nach einer Woche | |
|---|---|---|
| Natamycin | 2 mg/L | |
| Mycosamin | 2 mg/L | |
| **Wirkstoff-Mischung** | **MHK (mg/L) nach einer Woche** | **Synergistischer Index** |
| Natamycin Mycosamin (Gewichtsverhältnis 2:1) | 1,5 mg/L | SI= 0,75 |

**Beispiel 4:**

Ein Getränk (Eistee, nicht karbonisiert) wurde mit je 250 CFU/mL der eingesetzten unten genannten Mikroorganismen kontaminiert und eine Mischung aus Natamycin und Mycosamin wurde im Vergleich zu den Einzelsubstanzen auf Wirksamkeit hin untersucht. Nach einer Woche wurde ein Anteil des Mediums auf das Vorhandensein von Mikroorganismen untersucht und durch diese Versuche die MHK (Minimale Hemmkonzentration) bestimmt.

| | |
|---|---|
| Einzel-Testsubstanzen: | Natamycin, Mycosamin |
| Testkeim: | Mischung aus *Saccharomyces cerevisiae*, *Zygosaccharomyces bailii*, *Penicillium carneum* und *Trichoderma virens* |
| Substrat: | Eistee, nicht karbonisiert |
| Keimeinsaat pro mL Substrat: | 250 cfu/mL je oben aufgeführten Testkeims |

**Tabelle 4:**

| Wirkstoff-einzeln | MHK (mg/L) nach einer Woche | |
|---|---|---|
| Natamycin | 4 mg/L | |
| Mycosamin | 0,75 mg/L | |
| **Wirkstoff-Mischung** | **MHK (mg/L) nach einer Woche** | **Synergistischer Index** |
| Natamycin Mycosamin (Gewichtsverhältnis 8 : 1) | 2,25 mg/L | SI= 0,83 |

Nach der in Kull, F.C. et al.; Mixtures of quarternary ammonium compounds and longchain fatty acids as antifungal agents. Applied Microbiology, 9, 538-541, 1961, beschriebenen Methode wurde der Synergismus ermittelt.
Dabei gelten folgende Beziehungen:

$$QA/Qa + QB/Qb = SI$$

Qa = Konzentration von Substanz A, welche die MHK darstellt

Qb= Konzentration von Substanz B, welche die MHK darstellt

QA= Konzentration von Substanz A in der Konzentration von A/B, die das Mikrobenwachstum unterbindet

QB = Konzentration von Substanz B in der Konzentration von A/B, die das Mikrobenwachstum unterbindet

SI = Synergistischer Index

SI = 1 bedeutet Additivität

SI >1 bedeutet Antagonismus

SI<1 bedeutet Synergismus

**Patentansprüche**

1. Mischung enthaltend Natamycin und Mycosamin in einer Menge > 95 Gew. % bezogen auf das Gesamtgewicht der Mischung und in einem Gewichtsverhältnis von 1 : 10 bis 10:1.

2. Mischung gemäß Anspruch 1, **dadurch gekennzeichnet, dass** Natamycin und Mycosamin in einer Menge > 98 Gew. % bezogen auf das Gesamtgewicht der Mischung in der Mischung enthalten sind.

3. Mischung gemäß Anspruch 1 oder 2, **dadurch gekennzeichnet, dass** Natamycin und Mycosamin in einem Gewichtsverhältnis von 1 : 8 bis 1 : 3 in der Mischung enthalten sind.

4. Mischung nach mindestens einem der Ansprüche 1 bis 3, **dadurch gekennzeichnet, dass** Natamycin und Mycosamin in einem Gewichtsverhältnis von 1 : 6 bis 1 : 3 in der Mischung enthalten sind.

5. Verwendung der Mischung nach mindestens einem der Ansprüche 1 bis 4 zur Entkeimung und Konservierung von Nahrungsmitteln und Getränken.

6. Verwendung gemäß Anspruch 5, **dadurch gekennzeichnet, dass** die Mischung aus Anspruch 1 in einer Menge von 0,01 (mg/L) bis 100 (mg/L) eingesetzt wird, bezogen auf die Menge an zu behandelndem Getränk oder Nahrungsmittel.

7. Verwendung gemäß einem der Ansprüche 5 oder 6, **dadurch gekennzeichnet, dass** als Getränke Erfrischungsgetränke sowie alkoholische Getränke, wie insbesondere Eistees, Sportdrinks, Fruchtsäfte und fruchtsafthaltige Getränke, Weine, Cocktails, Alcopops, Cider, Biermischgetränke behandelt werden.

8. Verwendung gemäß mindestens einem der Ansprüche 5 bis 7, **dadurch gekennzeichnet, dass** die Entkeimung und Konservierung gegen die Mikroorganismen Aspergillus chevalieri, Aspergillus clavatus, Aspergillus flavus, Aspergillus nidulans, Aspergillus niger, Aspergillus ochraceus, Aspergillus orycae, Botrytis cinerea, Fusarium sporotrichioides, Gloeosporium album, Mucor mucedo, Penicillium chrysogenum, Penicillium digitatum, Penicillium expansum, Penicillium islandicum, Penicillium notatum, Penicillium roqueforti, Rhizopus oryzae, Candida glabrata, Candida krusei, Saccharomyces cerevisiae, Zygosaccharomyces bailii, Penicillium carneum, Trichoderma virens und Candida albicans erfolgt.

9. Verfahren zur Entkeimung von Getränken oder Nahrungsmitteln, **dadurch gekennzeichnet, dass** die Mischung gemäß Anspruch 1 in die Getränke oder Nahrungsmittel eingearbeitet wird.

10. Verfahren gemäß Anspruch 9, **dadurch gekennzeichnet, dass** Getränke entkeimt und konserviert werden.

11. Verfahren gemäß Anspruch 10, **dadurch gekennzeichnet, dass** die Einarbeitung durch Zugabe mittels eines automatischen Dosiersystems erfolgt.

12. Verfahren gemäß einem der Ansprüche 10 oder 11, **dadurch gekennzeichnet, dass** die Einarbeitung der Mischung bei einer Temperatur von 4°C bis 40°C erfolgt.

13. Verfahren gemäß mindestens einem der Ansprüche 10 bis 12, **dadurch gekennzeichnet, dass** die Getränke einen pH Wert von 5 bis 8 aufweisen.


**Claims**

1. Mixture containing natamycin and mycosamine in an amount > 95% by weight, based on the total weight of the mixture, and in a weight ratio of from 1:10 to 10:1.

2. Mixture according to Claim 1, **characterized in that** natamycin and mycosamine are present in the mixture in an amount > 98% by weight, based on the total weight of the mixture.

3. Mixture according to Claim 1 or 2, **characterized in that** natamycin and mycosamine are present in the mixture in a weight ratio of from 1:8 to 1:3.

4. Mixture according to at least one of Claims 1 to 3, **characterized in that** natamycin and mycosamine are present in the mixture in a weight ratio of from 1:6 to 1:3.

5. Use of the mixture according to at least one of Claims 1 to 4 for the degermation and preservation of foods and drinks.

6. Use according to Claim 5, **characterized in that** the mixture from Claim 1 is used in an amount of from 0.01 (mg/l) to 100 (mg/l), based on the amount of drink or food to be treated.

7. Use according to either of Claims 5 and 6, **characterized in that** the drinks treated are refreshment drinks and also alcoholic drinks, such as, in particular, iced teas, sports drinks, fruit juices and fruit juice-containing drinks, wines, cocktails, alcopops, cider, mixed beer drinks.

8. Use according to at least one of Claims 5 to 7, **characterized in that** the degermation and preservation is carried out against the microorganisms Aspergillus chevalieri, Aspergillus clavatus, Aspergillus flavus, Aspergillus nidulans, Aspergillus niger, Aspergillus ochraceus, Aspergillus orycae, Botrytis cinerea, Fusarium sporotrichioides, Gloeosporium album, Mucor mucedo, Penicillium chrysogenum, Penicillium digitatum, Penicillium expansum, Penicillium islandicum, Penicillium notatum, Penicillium roqueforti, Rhizopus oryzae, Candida glabrata, Candida krusei, Saccharomyces cerevisiae, Zygosaccharomyces bailii, Penicillium carneum, Trichoderma virens and Candida albicans.

9. Method for degerming drinks or foods, **characterized in that** the mixture according to Claim 1 is incorporated into the drinks or foods.

10. Method according to Claim 9, **characterized in that** drinks are degermed and preserved.

11. Method according to Claim 10, **characterized in that** the incorporation is carried out by addition by means of an automatic metering system.

12. Method according to either of Claims 10 and 11, **characterized in that** the incorporation of the mixture is carried out at a temperature of from 4°C to 40°C.

13. Method according to at least one of Claims 10 to 12, **characterized in that** the drinks have a pH of from 5 to 8.

**Revendications**

1. Mélange contenant de la natamycine et de la mycosamine en une quantité > 95 % en poids par rapport au poids total du mélange, et selon un rapport en poids de 1:10 à 10:1.

2. Mélange selon la revendication 1, **caractérisé en ce que** le mélange contient la natamycine et la mycosamine en une quantité > 98 % en poids par rapport au poids total du mélange.

3. Mélange selon la revendication 1 ou 2, **caractérisé en ce que** le mélange contient la natamycine et la mycosamine selon un rapport en poids de 1:8 à 1:3.

4. Mélange selon au moins l'une des revendications 1 à 3, **caractérisé en ce que** le mélange contient la natamycine et la mycosamine selon un rapport en poids de 1:6 à 1:3.

5. Utilisation du mélange selon au moins l'une des revendications 1 à 4 pour stériliser et conserver des aliments et des boissons.

6. Utilisation selon la revendication 5, **caractérisée en ce que** le mélange selon la revendication 1 est utilisé en une quantité de 0,01 (mg/L) à 100 (mg/L), par rapport à la quantité de la boisson ou de l'aliment à traiter.

7. Utilisation selon l'une des revendications 5 ou 6, **caractérisée en ce que** sont traitées en tant que boissons des boissons rafraîchissantes ainsi que des boissons alcooliques, telles en particulier que les thés glacés, les boissons pour sportifs, les jus de fruits et les boissons contenant du jus de fruits, les vins, les cocktails, les alcopops, le cidre, les panachés.

**8.** Utilisation selon au moins l'une des revendications 5 à 7, **caractérisée en ce que** la stérilisation et la conservation ont lieu vis-à-vis des microorganismes aspergillus chevalieri, aspergillus clavatus, aspergillus flavus, aspergillus nidulans, aspergillus niger, aspergillus ochraceus, aspergillus orycae, botrytis cinerea, fusarium sporotrichioides, gloeosporium album, mucor mucedo, pénicillium chrysogenum, pénicillium digitatum, pénicillium expansum, pénicillium islandicum, pénicillium notatum, pénicillium roqueforti, rhizopus oryzae, candida glabrata, candida krusei, saccharomyces cerevisiae, zygosaccharomyces bailii, pénicillium carneum, trichoderma virens et candida albicans.

**9.** Procédé de stérilisation de boissons et d'aliments, **caractérisé en ce que** le mélange selon la revendication 1 est incorporé dans les boissons ou les aliments.

**10.** Procédé selon la revendication 9, **caractérisé en ce que** ce sont des boissons qui sont stérilisées et conservées.

**11.** Procédé selon la revendication 10, **caractérisé en ce que** l'incorporation a lieu par addition à l'aide d'un système doseur automatique.

**12.** Procédé selon l'une des revendications 10 ou 11, **caractérisé en ce que** l'incorporation du mélange a lieu à une température de 4 °C à 40 °C.

**13.** Procédé selon au moins l'une des revendications 10 à 12, **caractérisé en ce que** les boissons présentent un pH de 5 à 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6136356 B

- US 2014141137 A

**In der Beschreibung aufgeführte Nicht-Patentliteratur**

- **AGUILAR et al.** Scientific Opinion on the use of natamycin (E 235) as a food additive. *THE EFSA JOUR-NAL,* 2009
- **H BRIK.** *New high-molecular decomposition products of natamycin (pimaricin) with intact lactone-ring,* 1976
- **BRIK H.** *The Journal of Antibiotics,* 1976, vol. XXIX (6), 632-637

- *CHEMICAL ABSTRACTS,* 7681-93-8
- *CHEMICAL ABSTRACTS,* 527-38-8
- **KULL, F.C. et al.** Mixtures of quarternary ammonium compounds and longchain fatty acids as antifungal agents. *Applied Microbiology,* 1961, vol. 9, 538-541